# EUROPEAN PATENT APPLICATION

(11) **EP 3 087 947 A1**
(43) Date of publication of application: **02.11.2016**
(21) Application number: 14873411.4
(22) Date of filing: 16.01.2014
(51) Int. Cl.: A61C 8/00, A61C 13/277

(54) **DENTAL IMPLANT**

(30) Priority: 27.12.2013 KR 20130164939
(71) Applicant: Kim, Hyeong Woo, Gyeonggi-do 463-898 (KR); Kim, Gyun Hwan, Goyang-si, Gyeonggi-do 411-730 (KR); Kim, Sun Young, Goyang-si, Gyeonggi-do 411-730 (KR)
(72) Inventor: Kim, Hyeong Woo, Gyeonggi-do 463-898 (KR); Kim, Gyun Hwan, Goyang-si, Gyeonggi-do 411-730 (KR); Kim, Sun Young, Goyang-si, Gyeonggi-do 411-730 (KR)
(74) Representative: Lermer, Christoph
(86) International application number: PCT/KR2014/000490
(87) International publication number: WO 2015/099237

(57) **Abstract**

The present invention generally relates to a dental implant related to a prosthetic tooth. More particularly, the present invention relates to a dental implant having a fixing structure in which a fixture and an abutment are resiliently coupled, wherein a plurality of resilient legs are formed by means of a cutout portion in a lower fastening shaft portion of the abutment, the plurality of resilient legs having two functions and including: a resiliently-fastening leg with a fastening means, such as a fastening recess, a fastening projection, or a fastening ledge, fastened to a fastening portion corresponding to the fixture; and a non-fastening support leg without a fastening means.

## Description

### Technical Field

The present invention relates generally to a dental implant related to a prosthetic tooth. More particularly, the present invention relates to a dental implant having a fixing structure in which a fixture and an abutment are resiliently coupled, wherein the implant is configured such that a plurality of resilient legs are formed by means of a cutout portion in a lower fastening shaft portion of the abutment that is coupled to the fixture, the plurality of resilient legs including a resiliently-fastening leg with a fastening means, such as a fastening recess, a fastening projection, or a fastening ledge, and a non-fastening support leg without having the fastening means, or the implant is configured such that a plurality of fastening legs are provided with respective fastening means formed at different axial positions, whereby it is possible to reduce a size of a required clearance for allowing the fastening leg to be bent. Thus, it is possible to enlarge the thickness of the resiliently-fastening leg provided in the lower fastening shaft portion of the abutment fastened to the fixture having a smaller diameter than the fixture of the conventional implant, or possible to enlarge the size of the fastening means, such as a fastening recess, a fastening projection, or a fastening ledge, formed on a part of the resiliently-fastening leg, thereby considerably improving rigidity of the resiliently-fastening leg and improving shock-absorption and durability or fastening force to have improved retentivity. Further, it is possible to manufacture the fixture having a smaller diameter than the fixture of the conventional implant, whereby the dental implant procedure can be easily performed on a patient who has a thin alveolar bone, without an alveolar bone graft.

### Background Art

In dentistry, an implant means an artificial tooth substituting for a lost natural tooth or a dental procedure that is conducted in such a manner that a fixture is implanted into a jawbone to be fused with the jawbone for a predetermined period, and prostheses such as a coupling member, artificial teeth, and the like are then fixed thereon so that the original functions of teeth can be recovered.

In the case of an implant that is generally used, a fixture implanted into a jawbone is coupled to a coupling part of an abutment in an upper shaft hole of the fixture using a screw coupling method.

However, such a conventional screw coupling method is problematic in that screw loosening, screw fracture or the like is caused and the aesthetic impression of prostheses is reduced because coupling of the fixture corresponding to a lower structure and the abutment corresponding to an upper structure is completely dependent upon screw coupling.

In order to solve this problem, Korean Patent No. 10-0668368 entitled "Dental implant" provides, as shown in FIG. 1, includes: a fixture 10 having a shaft hole 12 in an upper portion thereof and implanted into a jawbone; and an abutment 20 having fastening legs 22 made of a shape memory alloy, the legs being inserted into the shaft hole 12 of the fixture in a lower portion thereof and coupled to the fixture so that teeth can be used to chew food.

Such a conventional dental implant 1 is configured such that the fastening recess 14 of the fixture 10 and the fastening projection 24 of the abutment 20 are complementarily coupled to each other in pair-bonding so that a screw loosening phenomenon or a screw fracture phenomenon can be prevented from occurring, and the aesthetic impression of prostheses can be secured.

However, in the conventional dental implant 1 or in a dental implant configured such that when the resiliently-fastening leg in the lower portion of the abutment is inserted into the shaft hole of the fixture, the resiliently-fastening leg is resiliently bent toward central axis thereof, and then goes back to the original position thereof, thereby being fastened to the fixture, in a case where a patient who has a thin alveolar bone to which the fixture 10 is implanted, a diameter of the fixture 10 implanted into the thin alveolar bone should be small. When the diameter of the fixture 10 is small, the internal diameter of the shaft hole 12 should be reduced, and thereby a diameter of a lower fastening shaft portion of the abutment 20, which is inserted into the shaft hole 12, should be small.

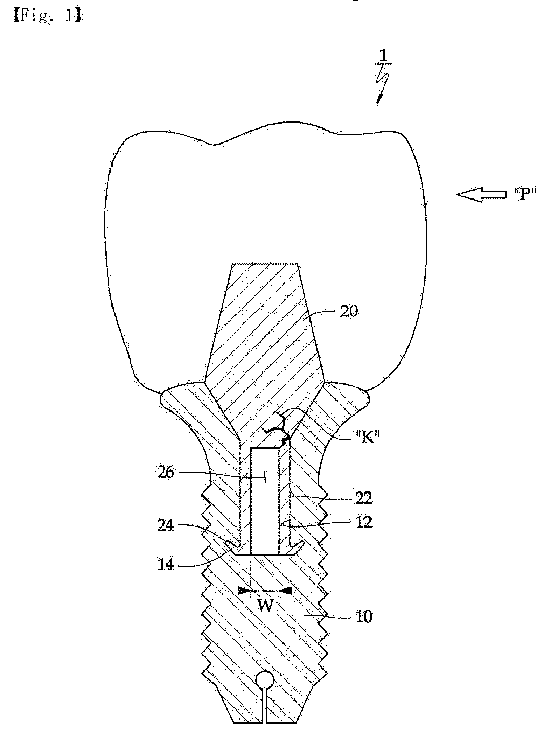

Meanwhile, in order to fasten a plurality of resiliently-fastening legs 22 to the shaft hole 12 of the fixture 10, as shown in FIG. 1, the abutment 20 should be configured such that a cut-out portion 26 is formed between the fastening legs 22, and a clearance W for allowing the fastening legs 22 to be bent is provided to allow fastening projections 24 of a plurality of fastening legs 22 to be inserted into the shaft hole 12 of the fixture 10 and to be engaged with fastening recesses 14 correspondingly formed on the inner side surface of the shaft hole.

Here, in order for a fastening means, such as the fastening projection formed on the resiliently-fastening leg of the lower fastening shaft portion of the abutment, to have an appropriate fastening force, the fastening means is required to have a predetermined minimum size, and the clearance W, which is provided between the fastening legs to allow the fastening legs 22 of the lower fastening shaft portion of the abutment to be bent, should be sufficiently obtained such that the fastening means, such as the fastening projection, is inserted into the shaft hole of the fixture and engaged therewith when the fastening means having the predetermined minimum size is inserted into the shaft hole of the fixture to be engaged therewith.

However, in the case where the diameter of the lower fastening shaft portion of the abutment 20 is reduced, a width of the clearance W for allowing the fastening leg to be bent should be larger than a total width 2T of the fastening means. Thus, when the fastening means have a width T to have the appropriate fastening force, the clearance W, which is provided between the fastening legs 22 to allow the fastening legs to be bent, should be sufficiently obtained, whereby it is impossible to make the fastening legs 22 have the desirable thickness.

In other words, it is impossible for the fastening legs 22 to be bent without the cut-out portion 26. For this reason, when the cut-out portion 26, namely the clearance, has a predetermined size, the lower fastening shaft portion having reduced diameter cannot provided with the fastening legs 22 having an appropriate thickness.

Thus, in the case where the fastening legs 22 do not have the appropriate thickness, as shown in FIG. 1, when lateral pressure P is exerted on the implant from the outside, cracking K occurs at a connection portion of the fastening legs 22, which extends from the abutment 20, due to have a vulnerable structure, and other damage frequently occurs. Further, it is difficult to provide appropriate retentivity and the appropriate fastening force.

In a structure where the lower fastening shaft portion of the abutment having a restricted small diameter is fastened to the fixture having a small diameter, which is implanted into a thin alveolar bone, by using the conventional technology, it is impossible to design the implant configured to have sufficient clearance for allowing the fastening legs with a sufficient size to be bent, to resist lateral pressure from the outside, and to have the fastening legs 22 with sufficient thickness to have the appropriate fastening force.

### Disclosure

### Technical Problem

Accordingly, the present invention has been made keeping in mind the above problems occurring in the related art, and the present invention is intended to propose a dental implant capable allowing, in a case where the implant having the fixture with the small diameter is required to be implanted into a patient who has a thin alveolar bone, the thickness of the resiliently-fastening leg provided in the lower fastening shaft portion of the abutment to be larger than the fastening leg of the conventional implant even when the fixture with a small diameter is used, or the size of the fastening means, such as a fastening projection, a fastening recess, or a fastening ledge, to be larger, whereby the resiliently-fastening leg of the lower fastening shaft portion of the abutment may firmly resist external pressure exerted on the prosthetic tooth. Further, the dental implant according to the present invention allows a state where the abutment is inserted into and coupled to the fixture by means of a resilient fastening force to be maintained, whereby facilitating a dental implant procedure without requiring an alveolar bone graft to enable implantation of a large diameter fixture into the thin alveolar bone. Further, the dental implant according to the present invention allows durability of the implant structure to be considerably improved after the dental implant procedure, thereby increasing the life span of the implant.

### Technical Solution

In order to achieve the above object, according to one aspect of the present invention, there is provided a dental implant including: a fixture including a shaft hole provided at an upper part thereof and a guide hole provided therein, the fixture being implanted into a jawbone; and an abutment including a lower fastening shaft portion inserted into the shaft hole of the fixture so as to be resiliently coupled to the fixture, and an upper mounting portion allowing a prosthesis to be mounted thereto, wherein the abutment is provided with a plurality of resilient legs at the lower fastening shaft portion thereof by means of a cutout portion, wherein the plurality of resilient legs includes two kinds of legs: a resiliently-fastening leg fastened to a fastening portion of the fixture by being provided with a fastening means, such as a fastening recess, a fastening projection, or a fastening ledge; and a non-fastening support leg without having the fastening means.

Preferably, a set of the resiliently-fastening leg and the non-fastening support leg may be provided or multiple sets thereof may be provided at the lower fastening shaft portion of the abutment, wherein the non-fastening support leg is formed to be shorter in length than the resiliently-fastening leg, formed to be equal in length to the resiliently-fastening leg, or formed to be longer in length than the resiliently-fastening leg.

More preferably, the fastening means, such as a fastening recess or a fastening projection, formed on the resiliently-fastening leg may be fastened to the fastening portion, such as a fastening recess or a fastening projection, correspondingly formed to be annular in shape on an inner side surface of the shaft hole of the fixture throughout a circumferential direction thereof, thereby allowing the abutment to be mounted to the fixture regardless of a direction of fastening.

In order to achieve the above object, according to another aspect of the present invention, there is provided a dental implant including: a fixture including a shaft hole provided at an upper part thereof, and a guide hole provided therein, the fixture being implanted into a jawbone; and an abutment including a lower resiliently-fastening shaft portion inserted into the shaft hole of the fixture so as to be resiliently coupled to the fixture, and an upper mounting portion allowing a prosthesis to be mounted thereto, wherein the abutment includes: a single resiliently-fastening leg with a fastening means, such as a fastening recess, a fastening projection, or a fastening ledge, fastened to a fastening portion provided on an inner side surface of the shaft hole of the fixture; and a cutout portion formed at a location adjacent to the fastening leg so as to allow the fastening leg to be bent while filling from an upper portion of the shaft hole of the fixture to a predetermined location of the fixture.

Preferably, the abutment inserted into the fixture may be configured such that a distance from the junction coming into close contact with the upper portion of the fixture when the abutment is coupled to the fixture to the location from which the resiliently-fastening leg begins is longer than the resiliently-fastening leg.

In order to achieve the above object, according to a further aspect of the present invention, there is provided a dental implant including: a fixture including a shaft hole provided at an upper part thereof, and a guide hole provided therein, the fixture being implanted into a jawbone; and an abutment including a lower resiliently-fastening shaft portion inserted into the shaft hole of the fixture so as to be resiliently coupled to the fixture, and an upper mounting portion allowing a prosthesis to be mounted thereto, wherein the abutment includes: a plurality of fastening legs fastened to a fastening portion provided on an inner side surface of the shaft hole of the fixture; and a cutout portion formed between the plurality of fastening legs so as to allow the fastening legs to be bent, wherein the fastening legs are provided with respective fastening projections that are different in size.

In order to achieve the above object, according to still another aspect of the present invention, there is provided a dental implant including: a fixture including a shaft hole provided at an upper part thereof, and a guide hole provided therein, and implanted into a jawbone; and an abutment including a lower resiliently-fastening shaft portion inserted into the shaft hole of the fixture so as to be resiliently coupled to the fixture, and an upper mounting portion allowing a prosthesis to be mounted thereto, wherein the abutment includes: a plurality of fastening legs fastened to fastening portions provided on an inner side surface of the shaft hole of the fixture; and a cutout portion formed between the plurality of fastening legs so as to allow the fastening legs to be bent, wherein the fastening legs are provided with fastening means, such as fastening recesses or fastening projections, that are formed at different axial positions.

### Advantageous Effects

According to the present invention having the above-described characteristics, it is possible to enlarge the thickness of the fastening leg provided in the abutment, which is inserted into the fixture having a smaller diameter than the conventional implant, or possible to enlarge the size of the fastening means when the implant having the fixture and the abutment with the small diameters is required to be implanted into a patient who has a thin alveolar bone.

Thus, it is possible to improve rigidity of the resiliently-fastening leg of the abutment, and thereby possible to firmly resist external pressure exerted on the dental implant having a small diameter. Further, it is possible to insert and couple the abutment to the fixture by means of resilient fastening force. Further, it is possible to sufficiently secure structural stability even with an implant having a small diameter, thereby allowing the implant to be implanted into a thin alveolar bone without an alveolar bone graft, which may increase failure ratio and cost, to enable implantation of a large diameter fixture into a thin alveolar bone. Thus, the present invention facilitates the dental implant procedure, and after the procedure, durability of the implant structure is considerably improved, thereby increasing the life span of the implant. Further, the present invention allows an implant that can be easily implanted into a thin alveolar bone area, which was conventionally impossible, to be manufactured.

### Description of Drawings

FIG. 1 is a side cross-sectional view illustrating a clearance W for allowing a fastening leg to be bent required by a conventional dental implant, and a structural problem that the fastening leg is vulnerable to an external force;
FIG. 2 is an exploded perspective view illustrating a dental implant according to the present invention including a single resiliently-fastening leg with a fastening means provided in a lower fastening shaft portion of an abutment, and a cutout portion having a clearance W provided at a location opposite to the fastening leg to allow the fastening leg to be bent when the single resiliently-fastening leg is fastened to a fixture;
FIG. 3a is a side cross-sectional view illustrating a structure of the dental implant according to the present invention where a fastening projection of the single resiliently-fastening leg is engaged with a fastening recess correspondingly provided on an inner side surface of a shaft hole of the fixture throughout a circumferential direction thereof so as to allow the fastening leg to be mounted to the fixture;
FIG. 3b is a side cross-sectional view illustrating a structure of the dental implant according to the present invention where a fastening recess of the single resiliently-fastening leg is engaged with a fastening projection correspondingly provided on the inner side surface of the shaft hole of the fixture throughout a circumferential direction thereof so as to allow the fastening leg to be mounted to the fixture regardless of a direction of fastening;
FIG. 4a is a perspective view illustrating a structure of the dental implant according to the present invention where a non-fastening support leg is provided at a location opposite to the resiliently-fastening leg, wherein the non-fastening support leg is formed to be shorter in length than the resiliently-fastening leg;
FIG. 4b illustrates a side cross-sectional view of the dental implant of FIG. 4a, and a side cross-sectional view showing a difference in thickness between the non-fastening support legs of the dental implant of FIG. 4a;
FIG. 5a is a perspective view illustrating a structure of the dental implant according to the present invention where the non-fastening support leg is provided at a location opposite to the resiliently-fastening leg, wherein the non-fastening support leg is formed to be equal in length to the resiliently-fastening leg;
FIG. 5b is a side cross-sectional view illustrating the dental implant of FIG. 5a;
FIG. 6a is a side cross-sectional view illustrating a structure of the dental implant according to the present invention where a plurality of fastening legs are provided with respective fastening projections that are different in size;
FIG. 6b is a side cross-sectional view illustrating a structure of the dental implant according to the present invention where a plurality of fastening legs are provided with respective fastening projections that are different in size and disposed at different axial positions; and
FIG. 7 is a referential view illustrating a structure where the fastening projection of the resiliently-fastening leg is engaged with the fastening recess of the fixture in the dental implant according to the present invention.

### Mode for Invention

Reference will now be made in greater detail to an exemplary embodiment of the present invention, an example of which is illustrated in the accompanying drawings.

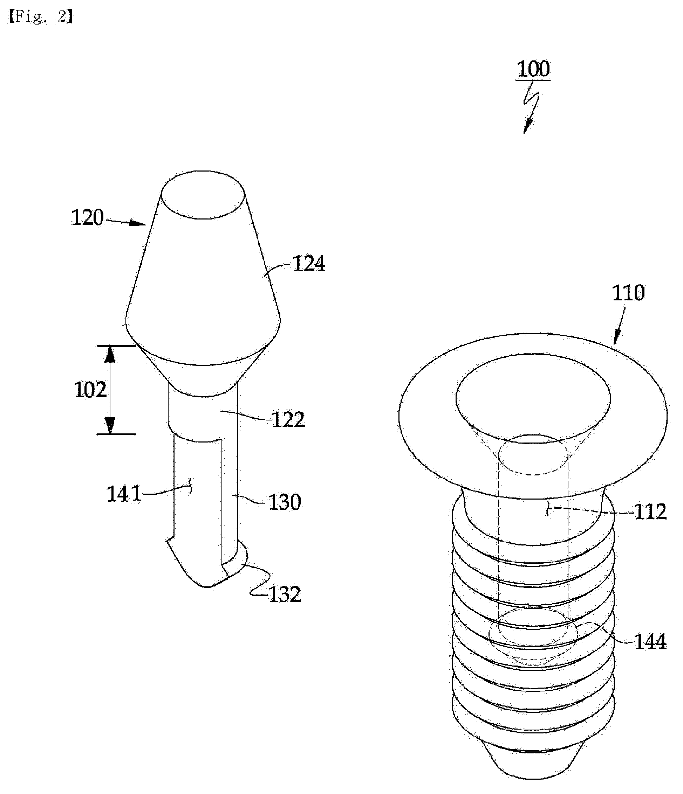

A dental implant 100 according to the present invention, as shown in FIG. 2, includes: a fixture 110 including a shaft hole 112 provided at an upper part thereof and a guide hole provided therein, and implanted into a alveolar bone; and an abutment 120 including a lower fastening shaft portion 122 inserted into the shaft hole 112 of the fixture 110 so as to be resiliently coupled to the fixture 110, and an upper mounting portion 124 allowing a prosthesis (not shown) to be mounted thereto. The basic structure of the implant is the same as the structure of the conventional implant.

However, unlike the conventional implant, the abutment 120 according to the present invention is configured such that a single resiliently-fastening leg 130 having a fastening projection 132 or a fastening recess 134, which is engaged in the shaft hole 112 of the fixture 110, is provided in the lower fastening shaft portion 122, and a cutout portion 140 or a cutout space is formed adjacent to the fastening leg 130 so as to allow the fastening leg 130 to be bent.

The present invention configured as described above is different from the conventional structure, which is configured such that a plurality of multiple fastening legs 22 is formed on the entire circumferential direction of the lower fastening shaft portion, in that the single resiliently-fastening leg 130 is provided at a part of a circumferential direction of the lower fastening shaft portion 122.

Thus, it is possible to obtain an enough clearance for allowing the fastening leg to be bent by securing a space occupied by both some of the fastening legs 22 and fastening projections 24 formed on the fastening legs 22, which are eliminated from the conventional structure shown in FIG. 1, whereby it is possible to further enlarge a thickness of the fastening leg 130 and a size of the fastening means according to the present invention, and thus it is possible to improve rigidity of the fastening leg 130.

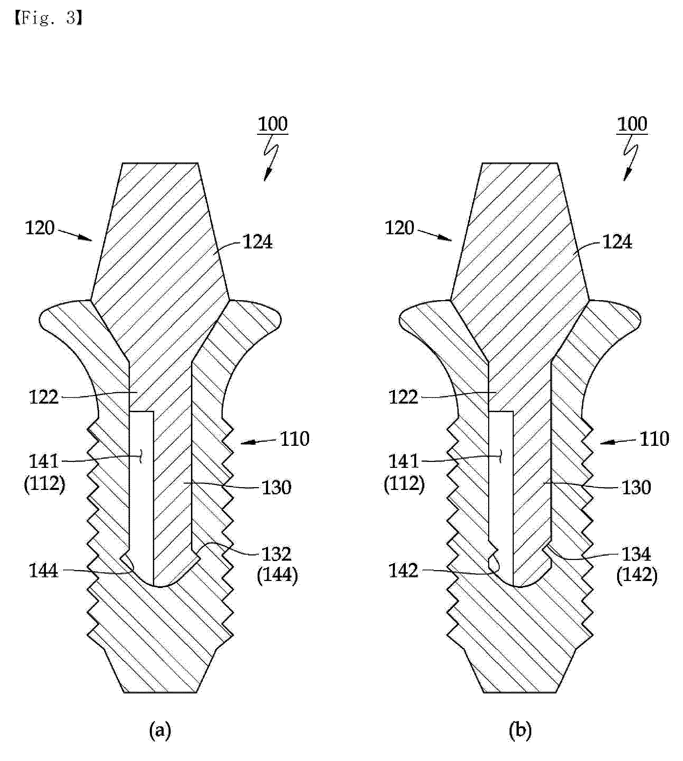

The structure of the fastening leg 130 according to the present invention may be configured, for example, to have a single fastening leg 130, as shown in FIG. 3a, wherein the fastening projection 132 formed on the fastening leg 130 is engaged with a fastening recess 144 provided on an inner side surface of the shaft hole 112 of the fixture 110 throughout a circumferential direction thereof, thereby allowing the fastening leg to be mounted to the fixture regardless of a direction of fastening.

Further, the supporting portion 102 provided at an upper portion of the fastening leg 130 of the lower fastening shaft portion 122 is necessarily inserted into the shaft hole 112 of the fixture 110 having the same axis as the fixture, thereby allowing the fastening leg to be securely fastened to the fixture 110 and to be securely supported against external force.

As shown in FIG. 3b, the present invention may be configured such that, instead of the fastening projection 132 of the fastening leg 130, the fastening recess 134 is provided in the fastening leg 130, and a fastening projection 142 is provided at a part of a circumferential direction of the an inner side surface of the shaft hole 112 of the fixture 110, whereby the fastening recess 134 is allowed to be engaged with the fastening projection 142 regardless of a direction of fastening.

Here, a length of the supporting portion defined from a junction K coming into close contact with the upper portion of the fixture when the abutment is completely coupled to the fixture to a location from which the resiliently-fastening leg begins may be longer than the resiliently-fastening leg so as to allow the abutment to be easily inserted into the shaft hole of the fixture.

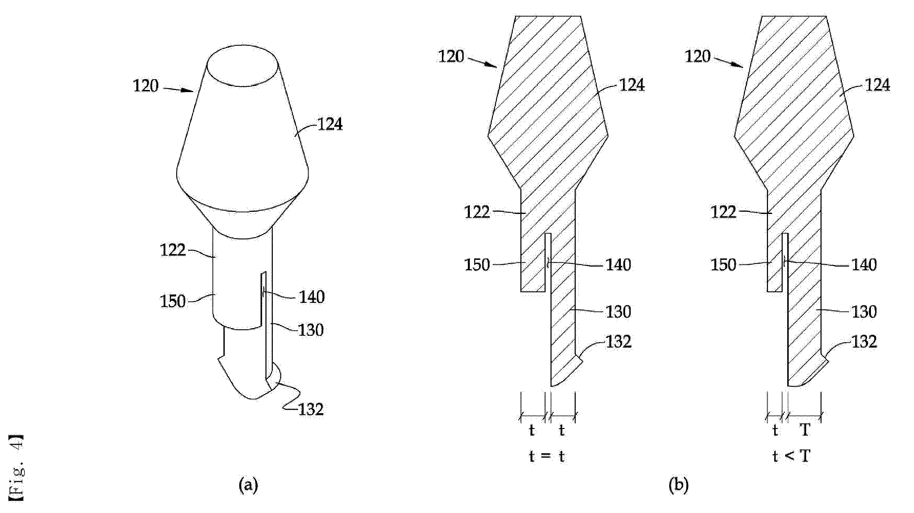

Further, as shown in FIGS. 4a and the left view of 4b, the present invention may be configured such that the abutment 120 includes the resiliently-fastening leg 130 provided based on the cutout portion 140, and the non-fastening support leg 150 provided at a location opposite to the fastening leg. Herein, the width of the cutout portion 140 is considerably smaller than the width of the conventional clearance for allowing the fastening leg to be bent, and the non-fastening support leg 150 is formed to be shorter than the fastening leg 130.

In the present invention configured as described above, as the non-fastening support leg 150 is provided with no fastening means 132 at an outer surface, the clearance, which is more largely required between the plurality of fastening legs in a conventional structure, is reduced, and thereby it is possible to further enlarge the thickness of the resiliently-fastening leg 130 or the size of the fastening means, and thus securing rigidity of the resiliently-fastening leg 130 and improving fastening force.

Alternatively, as shown in the right view of FIG. 4b, the non-fastening support leg 150 may be configured such that the thickness t thereof is thinner than the thickness T of the resiliently-fastening leg 130. Herein, the non-fastening support leg 150 is formed to be shorter than the fastening leg 130.

In the present invention configured as described above, as the non-fastening support leg 150 is provided with no fastening projection 132, the non-fastening support leg 150 is smaller in thickness, and the clearance, which is more largely required between the plurality of fastening legs in the conventional structure, is reduced, and thereby it is possible to further enlarge the thickness T of the resiliently-fastening leg 130 or the size of the fastening means, and thus securing rigidity of the resiliently-fastening leg 130 and improving fastening force.

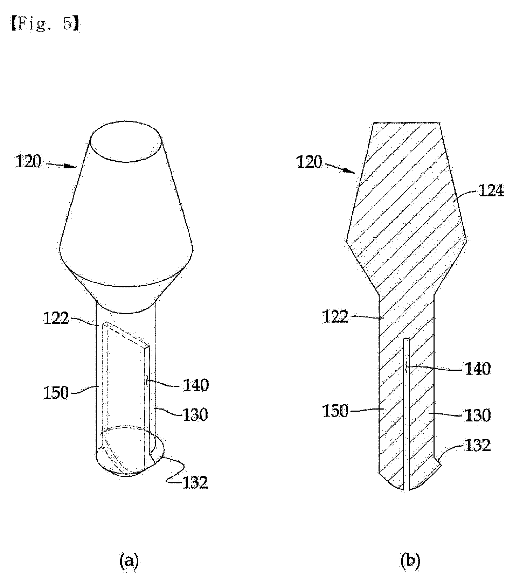

Further, as shown in FIGS. 5a and 5b, the present invention may be configured such that the non-fastening support leg 150 is formed to be equal in length as the resiliently-fastening leg 130.

In the structure described above, the present invention is capable of allowing the fastening leg 130 to be thicker because the clearance for allowing the fastening leg to be bent, which is more largely required in the conventional structure, is reduced, thereby securing rigidity of the fastening leg 130.

As described above, when the resiliently-fastening leg 130 and the non-fastening support leg 150 are provided, the lower fastening shaft portion 122 of the abutment 120 may be securely inserted into the shaft hole 112 of the fixture 110, and thereby it is possible to firmly resist the external force.

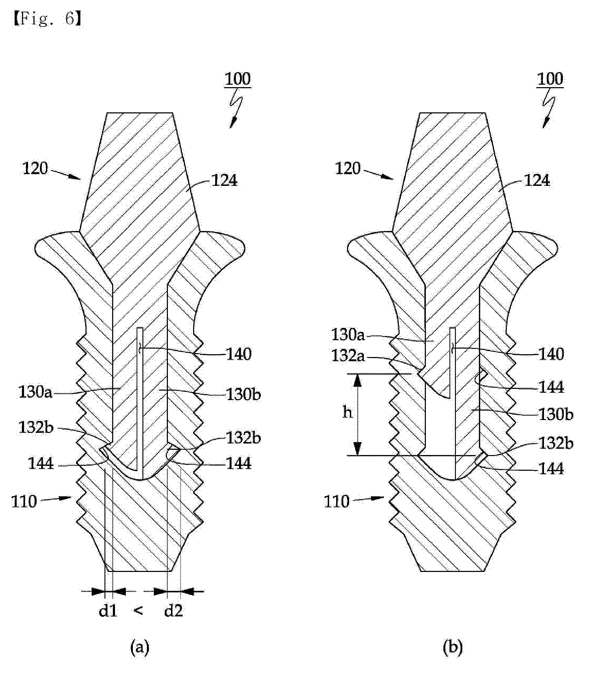

Meanwhile, the present invention may obtain the thickness of the fastening leg 130 through a modified structure that is different from the structure described above. For example, as shown in FIG. 6a, the abutment 120 includes: a plurality of fastening legs 130a and 130b fastened within the shaft hole 112 of the fixture 110; and a cutout portion 140 formed between the plurality of fastening legs 130a and 130b to allow the fastening legs 130a and 130b to be bent, wherein the fastening legs 130a and 130b are provided with respective fastening projections 132a and 132b that have different sizes d1 and d2.

In the structure described above, the fastening projections 132a and 132b formed on the fastening legs 130a and 130b may be configured such that one thereof is smaller than the conventional fastening projection, and the size of the clearance W for allowing the fastening leg to be bent may be reduced in accordance with the reduced size of the fastening projection, whereby in accordance with the reduced size of the clearance, the thickness of the resiliently-fastening leg may be thicker. Thus, it is possible to improve rigidity of the fastening legs 130a and 130b in this structure.

Further, as shown in FIG. 6b, the plurality of fastening legs 130a and 130b may be formed to be different in length such that the fastening projections 132a and 132b are different in height h. In this structure, the clearance for allowing the fastening leg to be bent may be reduced, and thereby the thickness of the resiliently-fastening leg or the size of the fastening means may be enlarged in accordance with the reduced size of the clearance. Further, in this structure, the fastening projections 132a and 132b formed on the fastening legs 130a and 130b may be configured such that one thereof is smaller than the conventional fastening projection, whereby in accordance with the reduced size of the fastening projection, the thickness of the resiliently-fastening leg may be thicker.

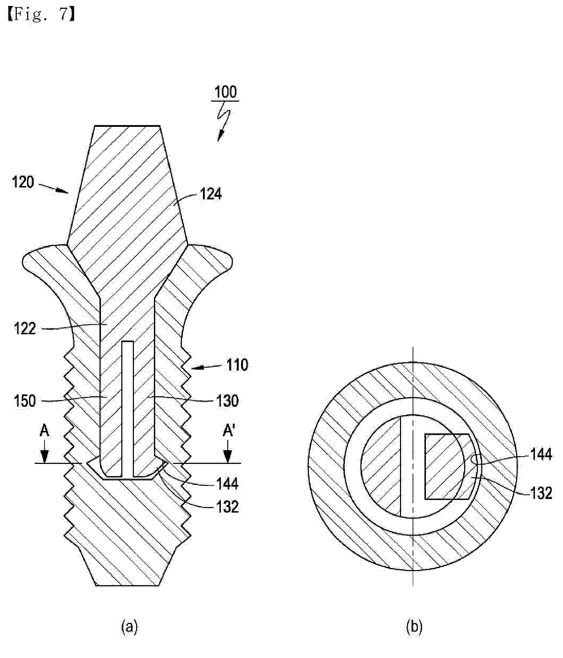

Meanwhile, FIG. 7 is a referential view illustrating a structure where the fastening projection of the resiliently-fastening leg is engaged with the fastening recess of the fixture in the dental implant according to the present invention

Referring to FIG. 7, since the lower fastening shaft portion 122 of the abutment 120 is fastened to the shaft hole 112 of the fixture 110, in order for the fastening projection 132 provided on the resiliently-fastening leg 130 of the lower fastening shaft portion 122 to be engaged with the fastening recess 144 provided on the inner side surface of the shaft hole of the fixture, the fastening projection should be formed to have a larger diameter than the diameter of the lower fastening shaft portion so as to protrude outwardly. Thus, when the fastening projection 132 of the lower fastening shaft portion of the abutment is inserted into the shaft hole of the fixture, the fastening projection 132 provided on the resiliently-fastening leg 130 comes into the inner side surface of the shaft hole by being resiliently bent and reaches the fastening portion, namely the fastening recess 144, of the fixture. Then, the fastening projection 132 is firmly engaged with the fastening recess 144 of the fixture by the resilience of the resiliently-fastening leg.

Although a preferred embodiment of the present invention has been described for illustrative purposes, those skilled in the art will appreciate that various modifications, additions and substitutions are possible, without departing from the scope and spirit of the invention as disclosed in the accompanying claims. For example, the single fastening leg 130 may be provided, or the fastening leg may be vertically cut to be divided into multiple sections. In addition, various alternatives, modifications, such as a case where the fastening leg 130 is provided at a part rather than the entirety of a circumferential direction of the lower fastening shaft portion 122, or a case where the fastening projection 132 or the fastening recess 134 provided on the fastening leg 130 is provided at a part rather than the entirety of a circumferential direction of the lower fastening shaft portion 122, may be included within the spirit and scope of the present invention as defined by the appended claims. Meanwhile, not shown in the accompanying drawings, the present invention may be configured such that a part of the lower fastening shaft portion of the abutment is formed to be a polygonal shape to prevent the abutment from rotation, and the inner surface of the shaft hole of the fixture is formed to be a shape so as to correspond to the polygonal shape, thereby receiving the lower fastening shaft portion of the abutment. Further, not shown in the accompanying drawings, the present invention may be configured such that at least one of the resiliently-fastening leg and the non-fastening support leg is made by vertically cutting a pipe-shaped (tubular) leg, and further a shape of the leg including the resiliently-fastening leg and the non-fastening support leg is not limited to a predetermined shape. Consequently, a structure having respective functions, namely the resiliently-fastening leg functioning to resiliently couple the abutment to the fixture, and the non-fastening support leg functioning to support the abutment without having the fastening means should be construed as equivalents falling within the spirit and scope of the present invention as defined by the appended claims.

## Claims

1. A dental implant comprising:
a fixture including a shaft hole provided at an upper part thereof and a guide hole provided therein, the fixture being implanted into a jawbone; and
an abutment including a lower fastening shaft portion inserted into the shaft hole of the fixture so as to be resiliently coupled to the fixture, and an upper mounting portion allowing a prosthesis to be mounted thereto, wherein
the abutment is provided with a plurality of resilient legs at the lower fastening shaft portion thereof by means of a cutout portion, wherein the plurality of resilient legs includes two kinds of legs: a resiliently-fastening leg fastened to a fastening portion of the fixture by being provided with a fastening means, such as a fastening recess, a fastening projection, or a fastening ledge; and a non-fastening support leg without a fastening means.

2. The dental implant of claim 1, wherein
in the lower fastening shaft portion of the abutment, the resiliently-fastening leg and the non-fastening support leg are adjacently formed to each other based on the cutout portion, wherein the non-fastening support leg is formed to be shorter in length than the resiliently-fastening leg, formed to be equal in length to the resiliently-fastening leg, or formed to be longer in length than the resiliently-fastening leg.

3. The dental implant of claim 1, wherein
the fastening means, such as the fastening projection or the fastening recess, provided on the resiliently-fastening leg is fastened to the fastening portion, such as a fastening recess or a fastening projection, correspondingly provided on an inner side surface of the shaft hole of the fixture throughout a circumferential direction thereof, thereby allowing the abutment to be mounted to the fixture regardless of a direction of fastening.

4. A dental implant comprising:
a fixture including a shaft hole provided at an upper part thereof, and a guide hole provided therein, the fixture being implanted into a jawbone; and
an abutment including a lower resiliently-fastening shaft portion inserted into the shaft hole of the fixture so as to be resiliently coupled to the fixture, and an upper mounting portion allowing a prosthesis to be mounted thereto, wherein
the abutment includes: a single resiliently-fastening leg with a fastening means, such as a fastening recess, a fastening projection, or a fastening ledge, fastened to a fastening portion provided on an inner side surface of the shaft hole of the fixture; a supporting portion defined between a junction (K) coming into close contact with an upper portion of the fixture and a location from which the resiliently-fastening leg fully filling the guide hole of the fixture begins, without a clearance for allowing the fastening leg to be bent; and a cutout portion formed at a location adjacent to the fastening leg so as to allow the fastening leg to be bent.

5. The dental implant of claim 4, wherein
the abutment inserted into the fixture is configured such that a length of the supporting portion from the junction coming into close contact with the upper portion of the fixture when the abutment is coupled to the fixture to the location from which the resiliently-fastening leg begins is longer than the resiliently-fastening leg.

6. A dental implant comprising:
a fixture including a shaft hole provided at an upper part thereof, and a guide hole provided therein, the fixture being implanted into a jawbone; and
an abutment including a lower resiliently-fastening shaft portion inserted into the shaft hole of the fixture so as to be resiliently coupled to the fixture, and an upper mounting portion allowing a prosthesis to be mounted thereto, wherein
the abutment includes: a plurality of fastening legs fastened to a fastening portion provided on an inner side surface of the shaft hole of the fixture; and a cutout portion formed between the plurality of fastening legs so as to allow the fastening legs to be bent, wherein the fastening legs are provided with respective fastening projections that are different in size.

7. A dental implant comprising:
a fixture including a shaft hole provided at an upper part thereof, and a guide hole provided therein, and implanted into a jawbone; and
an abutment including a lower resiliently-fastening shaft portion inserted into the shaft hole of the fixture so as to be resiliently coupled to the fixture, and an upper mounting portion allowing a prosthesis to be mounted thereto, wherein
the abutment includes: a plurality of fastening legs fastened to fastening portions provided on an inner side surface of the shaft hole of the fixture; and a cutout portion formed between the plurality of fastening legs so as to allow the fastening legs to be bent, wherein the fastening legs are provided with fastening means, such as fastening recesses or fastening projections, that are formed at different axial positions.
